**Europäisches Patentamt**

**European Patent Office**

**Office européen des brevets**

(19)

(11) Veröffentlichungsnummer: **0 157 950**
**B1**

(12)

# EUROPÄISCHE PATENTSCHRIFT

(45) Veröffentlichungstag der Patentschrift:
**08.03.89**

(51) Int. Cl.⁴: **B 23 Q 3/157**

(21) Anmeldenummer: **84116487.4**

(22) Anmeldetag: **28.12.84**

(54) Werkzeugmaschine mit einem in mehreren Achsen beweglichen Spindelstock.

(30) Priorität: **23.03.84 DE 3410656**

(43) Veröffentlichungstag der Anmeldung:
**16.10.85 Patentblatt 85/42**

(45) Bekanntmachung des Hinweises auf die Patenterteilung:
**08.03.89 Patentblatt 89/10**

(84) Benannte Vertragsstaaten:
**CH FR GB IT LI**

(56) Entgegenhaltungen:
**DD-A-83 894**
**DE-A-1 552 324**
**DE-A-1 752 605**
**DE-A-2 163 499**
**DE-A-3 017 613**
**DE-B-1 235 705**
**US-A-3 526 033**
**US-A-3 541 677**
**US-A-3 608 188**
**US-A-3 719 987**
**US-A-4 196 506**
**US-A-4 307 506**

(73) Patentinhaber: **Chiron- Werke GmbH, Talstrasse 23,
D-7200 Tuttlingen (DE)**

(72) Erfinder: **Rütschle, Eugen, Schönenbergstrasse 20,
D-7202 Mühlheim (DE)**
Erfinder: **Winkler, Hans- Henning,
Brunnentalstrasse 88, D-7200 Tuttlingen (DE)**

(74) Vertreter: **Witte, Alexander, Dr.- Ing.,
Schickhardtstrasse 24, D-7000 Stuttgart 1 (DE)**

LIBER, STOCKHOLM 1989

## Beschreibung

Die Erfindung betrifft eine Werkzeugmaschine mit einem in mehreren Achsen verfahrbaren Spindelstock mit einem Ständer an dem der Spindelstock verfahrbar ist, mit einer auf einer Seite des Ständers angeordneten Aufspannplatte zum Befestigen von Werkstücken, mit einem auf der gegenüberliegenden Seite des Ständers angeordneten Werkzeugmagazin und mit mindestens einer Transportvorrichtung zum Transportieren von Werkzeugen zwischen dem Werkzeugmagazin und einer im Spindelstock vorgesehenen Spindel, wobei die Transportvorrichtung eine Führungsschiene aufweist, deren eines Ende an einem relativ zum Werkzeugmagazin raumfesten Punkt und deren entgegengesetztes Ende am Spindelstock jeweils gelenkig befestigt ist und ein Greifer für die Werkzeuge entlang der Führungsschiene mittels einer Antriebsvorrichtung zwischen einer ersten Übergabeposition am Werkzeugmagazin und einer zweiten Übergabeposition am Spindelstock bewegbar ist, in der das Werkzeug mittels eines am Spindelstock angelenkten Greifarmes zwischen der zweiten Übergabeposition und einer Position in der Spindel austauschbar ist.

Eine derartige Werkzeugmaschine ist aus der DD-PS-83 894 bekannt.

Bei der bekannten Werkzeugmaschine ist ein in einer senkrechten Achse verfahrbarer, im übrigen jedoch raumfester Spindelstock vorgesehen, der eine horizontalachsige Spindel aufweist. Von der vorderen Spindelseite aus gesehen hinter dem Spindelstock ist ein Werkzeugmagazin angeordnet, das eine um eine horizontale Achse drehbare Trommel aufweist, in der unterschiedliche Werkzeuge in horizontaler Richtung auf Umfangspositionen eingesetzt sind.

Zwischen dem Werkzeugmagazin und dem Spindelstock ist ein sogenannter Schrägaufzug angeordnet, der an seinem dem Werkzeugmagazin zugewandten Ende an einem raumfesten Punkt und an seinem gegenüberliegenden Ende an dem in vertikaler Richtung verfahrbaren Teil des Spindelstocks, jeweils gelenkig, befestigt ist. Der Schrägaufzug besteht im wesentlichen aus einem aus Profilstäben gebildeten Gelenkviereck, das demzufolge in der Lage ist, an seinem vorderen, spindelstockseitigen Ende den Vertikalbewegungen des Spindelstocks zu folgen, während das hintere Ende in der beschriebenen Weise raumfest gelagert ist. Um den oberen Profilstab des Gelenkvierecks herum läuft ein Kettenförderer, der einen Zubringergreifer trägt, um Werkzeuge in horizontaler Ausrichtung aus dem Werkzeugmagazin entnehmen und in eine Übergabeposition neben dem Spindelstock verfahren zu können, in der ein am Spindelstock angeordneter Wechselgreifer die Werkzeuge dem Zubringergreifer entnimmt und in eine mit der Spindel fluchtende Lage verschwenkt. Hierzu ist der Wechselgreifer um eine horizontale Achse drehbar und er besteht aus zwei um 180° gegeneinander versetzten Armen, an deren freien Enden geeignete Greifelemente für die Werkzeuge vorgesehen sind.

Da das Gelenkviereck des Schrägaufzuges bei einer Vertikalbewegung des Spindelstocks auch in horizontaler Richtung ausweicht, ist der gesamte Schrägaufzug in Horizontalführungen verschiebbar gelagert, wobei an den gegenüberliegenden Enden der Horizontalführungen raumfeste Anschläge und Endschalter angeordnet sind. Auf diese Weise kann je nach Höhenlage des vorderen Endes des Gelenkvierecks bzw. je nach vorliegendem horizontalen Ausweichen des Gelenkvierecks beim Übernehmen von Werkzeugen aus dem oder in das Werkzeugmagazin bzw. aus dem oder in den Wechselgreifer eine horizontale Sollposition angefahren werden, die normfesten Endanschlägen entspricht, wo auf diese Weise die mit der Höhenposition des Spindelstocks variierende horizontale Ausweichbewegung zu eliminieren.

Die Steuerung für den Schrägaufzug bei dieser bekannten Werkzeugmaschine ist daher relativ aufwendig, weil infolge der ungünstigen Kinematik des Gelenkvierecks zusätzliche Parameter berücksichtigt und kompensiert werden müssen, um die Werkzeuge in den Übergabepositionen am Magazin bzw. am Wechselgreifer in definierten Positionen halten zu können.

Aus der DE-OS-1 752 605 ist eine Werkzeugwechselvorrichtung für Werkzeugmaschinen bekannt, bei der ein Werkzeugmagazin hinter dem Spindelstock angeordnet und eine Transportvorrichtung für die Werkzeuge aus dem Werkzeugmagazin zum Spindelstock vorgesehen ist. Die Transportvorrichtung ist raumfest ausgebildet, so daß der Spindelstock zum Ein- und Auswechseln von Werkzeugen jeweils in seiner Höhe soweit verfahren werden muß, bis er in den Bereich von Greifelementen kommt, die entlang der Transportvorrichtung führbar sind.

Der Nachteil dieser bekannten Vorrichtung liegt somit darin, daß ein Werkzeugwechsel in variablen Höhenpositionen des Spindelstocks nicht möglich ist.

Aus der DE-AS-1 235 705 ist noch ein Werkzeugspeicher für spanabhebende Programmwerkzeugmaschinen bekannt. Bei dieser bekannten Werkzeugmaschine ist neben einem Spindelstock mit horizontaler Spindelachse ein Werkzeugmagazin mit einem in einer Vertikalebene laufenden endlosen Kettenförderer angeordnet, der eine Vielzahl unterschiedlicher Werkzeuge tragen kann. Zwischen Werkzeugmagazin und Spindelstock ist ein um eine horizontale Achse drehbarer Schwenkgreifer angeordnet, der zwei um 90° gegeneinander versetzte Greifarme aufweist. Damit ist es möglich, gleichzeitig das auszuwechselnde und das einzuwechselnde Werkzeug zu erfassen.

Diese bekannte Werkzeugmaschine hat jedoch den Nachteil, daß aufgrund der unmittelbaren Nähe von Werkzeugmagazin und Spindelstock erhebliche räumliche Probleme auftreten und insbesondere für die Bearbeitung von großen Werkstücken mit entsprechend großen Aufspanntischen, die den gesamten Raum in der Nähe des Spindelstocks einnehmen können, nicht möglich ist.

Aus der DE-OS-3 017 613 ist schließlich noch eine Werkzeugwechselvorrichtung für eine Werkzeugmaschine bekannt, die ähnlich wie die zuvor beschriebene Vorrichtung aufgebaut ist. Bei dieser bekannten Werkzeugmaschine ist ein Spindelstock mit einem Winkelkopf vorgesehen, der eine horizontale Spindel und eine vertikale Spindel aufweist. Neben dem Spindelstock befindet sich ein in mehreren Achsen verfahrund verdrehbarer Greifmechanismus, an dessen freiem Ende gleichfalls ein zweiarmiger Greifarm mit unter etwa 90° zueinander ausgerichteten Armen vorgesehen ist, um die bereits beschriebene Schrittfolge zum Ein- und Auswechseln von Werkzeugen durchführen zu können.

Der Erfindung liegt demgegenüber die Aufgabe zugrunde, eine Werkzeugmaschine der eingangs genannten Art dahingehend weiterzubilden, daß die Steuerung des Transports zwischen dem hinter dem Spindelstock angeordneten Werkzeugmagazin und in einer Koordinate relativ zum Werkzeugmagazin verfahrbaren Spindelstock vereinfacht wird.

Diese Aufgabe wird erfindungsgemäß dadurch gelöst, daß der Greifarm um eine im wesentlichen radial zur Spindelachse verlaufende Schwenkachse, die in einer Ebene des Koordinatensystems der Werkzeugmaschine liegt, schwenkbar ist, daß die Antriebsvorrichtung eine mit dem Greifer verbundene Führungsstange aufweist, die in einem Wagen in Richtung der Achse verschiebbar gelagert ist und daß der Wagen in einer Richtung senkrecht zur Achse zwischen Spindelstock und Werkzeugmagazin verfahrbar ist.

Diese Maßnahmen lösen die der Erfindung zugrunde liegende Aufgabe deswegen vollkommen, weil lediglich eine raumfeste Antriebsvorrichtung vorgesehen ist, die zum Transportieren der Werkzeuge von einem raumfesten Endpunkt zu einem zweiten raumfesten Endpunkt verfahren muß, so daß insoweit vollkommen definierte Verhältnisse vorliegen. Die Transportbewegung der Werkzeuge auf der verschwenkten Bahn wird demgegenüber von dieser im Raum definierten Bewegung abgeleitet, so daß für alle Verschwenkzustände der Transportvorrichtung definierte Verhältnisse vorliegen. Es ist auf diese Weise vorteilhaft möglich, eine in der horizontalen wirksame Verschiebeeinrichtung zwischen zwei definierten Endanschlägen hin- und herfahren zu lassen, ohne daß - wie beim gattungsbildenden Stand der Technik - zusätzliche Bewegungen überlagert werden müßten.

Dies gilt vor allem dann, wenn in bevorzugter Ausgestaltung der Erfindung der Wagen mit einem Vorsprung in eine schraubengangartige Führung einer zur Verschiebebewegung des Wagens parallel angeordneten rotierend antreibbaren Walze eingreift.

Diese Masnahmen ergeben den Vorteil, daß die Walze lediglich durch einen Schrittmotor oder dgl. um eine bestimmte Anzahl von Drehungen bzw. Winkelschritten gedreht werden muß, wodurch vollkommen sichergestellt ist, daß die Werkzeuge in die definierten Übergabepositionen gelangen.

Dieses Ausführungsbeispiel kann bevorzugt dadurch weitergebildet werden, daß die Steigung der schraubengangähnlichen Führung über die Länge der Walze unterschiedlich ist.

Diese Maßnahme hat den Vorteil, daß die Verfahrgeschwindigkeit der Werkzeuge in der Transportvorrichtung beim Abfahren aus der und beim Einfahren in die übergabeposition verlangsamt ist, während im mittleren Bereich eine höhere Transportgeschwindigkeit eingestellt wird.

Bei weiteren Ausgestaltungen der Erfindung ist der Greifer in der Führungsschiene mittels eines Führungsstücks geführt und es kann das in die Führungsschiene eingreifende Führungsstück dann, wenn der Wagen sich in seiner vom Magazin am weitesten entfernten Stellung befindet, in Verlängerung einer Schwenklagerung-Achse liegen, mit der die Führungsschiene am Spindelstock angelenkt ist und/oder es kann das Führungsstück in seiner dem Magazin am weitesten angenäherten Stellung in Verlängerung der Schwenklagerung-Achse liegen, mit der die Führungsschiene am Ständer schwenkbar gelagert ist.

Diese Maßnahmen haben den Vorteil, daß das Werkzeug in immer derselben Höhe relativ zum Spindelstock an diesen ankommt und daß sich, in Längsrichtung der Transporteinrichtung gesehen, minimale Abmessungen bei größtmöglicher Ausnutzung für die Bewegung der Werkzeuge ergeben.

Bei weiteren Ausführungsbeispielen der Erfindung ist beidseits des Spindelstocks eine Transportvorrichtung vorgesehen.

Diese Maßnahme hat den Vorteil, daß die Werkzeugwechselzeiten weiter vermindert werden können, weil es möglich ist, das auszuwechselnde Werkzeug aus der Spindel sofort in eine Leerposition der einen Transportvorrichtung zu überführen und das einzuwechselnde Werkzeug aus einer Übergabeposition der anderen Transportvorrichtung in kurzem Abstand in die Spindel zu überführen.

Eine besonders gute Wirkung ergibt sich dann, wenn der Greifarm zwei miteinander gekoppelte Arme aufweist, die miteinander einen von 180° verschiedenen Winkel, vorzugsweise ein Winkel von 90° einschließen und an ihren Enden weitere Greifer aufweisen.

Diese an sich bekannte Maßnahme hat vor allem in Kombination mit der Maßnahme, beidseits des Spindelstocks eine Transportvorrichtung vorzusehen, den wesentlichen Vorteil, daß dann, wenn sich einer der Arme mit seinem freien Ende an der Spindel befindet, der andere Arm automatisch in eine Übergabeposition an einer Transportvorrichtung befinden kann und diese Verhältnisse durch Verschwenken des Greifarmes um 90° zyklisch vertauscht werden. Auf diese Weise kann durch eine einzige Schwenkbewegung des Greifarmes um 90° in der Ausgangsposition das einzuwechselnde Werkzeug aus einer Übergabeposition der einen Transportvorrichtung entnommen und gleichzeitig das auszuwechselnde Werkzeug aus der Spindel entnommen werden und in der anderen Position das einzuwechselnde Werkzeug in die Spindel eingesetzt und das ausgewechselte Werkzeug in die Übergabeposition der anderen Transporteinrichtung eingesetzt werden.

Weitere Einzelheiten ergeben sich aus der nachfolgenden Beschreibung eines Ausführungsbeispiels der Erfindung anhand der Zeichnung.

Fig. 1   eine Seitenansicht einer Vertikalmaschine,

Fig. 2   eine Seitenansicht einer Einzelheit der Fig. 1,

Fig. 3   eine Vorderansicht auf die Greifarme entsprechend dem Pfeil III in Fig. 2,

Fig. 4   eine der Fig. 3 ähnliche Darstellung, jedoch perspektivisch gezeichnet, wobei sich die Greifarme in ihrer anderen Endstellung befinden,

Fig. 5   einen Schnitt entsprechend der Linie V-V in Fig. 2,

Fig. 6   einen Schnitt entsprechend der Linie VI-VI in Fig. 2, gegenüber Fig. 5 vergrößert.

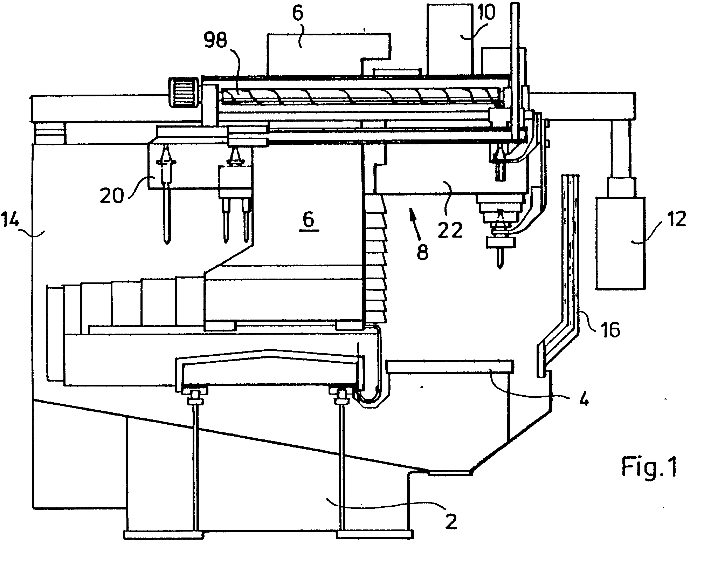

Fig. 1 zeigt die Gesamtansicht einer Vertikalwerkzeugmaschine, nämlich einer numerisch gesteuerten Werkzeugmaschine mit vertikaler Spindelachse. Auf einem Maschinenbett 2 ist die feste Aufspannplatte 4 für die Werkstücke gelagert. Ein Ständer 6 der Maschine ist in waagrechter Richtung in zwei rechtwinklig zueinander verlaufenden Richtungen verfahrbar. Am Ständer 6 ist ein Spindelstock 8 in vertikaler Richtung verschiebbar geführt und durch einen Elektromotor 10 angetrieben. Der die Maschine bedienende Arbeiter steht in Fig. 1 rechts und kann die Maschine mittels eines Bedienungsfeldes 12 betätigen. Die Maschine ist ringsum durch Blechwände 14 bzw. an ihrer Vorderseite durch eine durchsichtige Scheibe 16 gegen das Herausspritzen von Bohröl oder Spänen geschützt. An der Rückseite des Ständers 6, in Fig. 1 links, ist ein Werkzeugmagazin 20 angeordnet, das 42 Werkzeuge in einer mit Greifern versehenen geschlossenen Kette aufzunehmen gestattet. Das Magazin 20 ragt bei Betrachtung der Maschine von der Vorderseite, in Fig. 1 also von rechts, nach beiden Seiten in waagrechter Richtung über den Spindelstock 8 vor. Dort hat das Magazin in der Nähe der rechten und linken Seitenfläche 22 des Spindelstocks 8 jeweils eine Öffnung, durch die Werkzeuge in das Magazin automatisch eingeführt und aus diesem automatisch entnommen werden können.

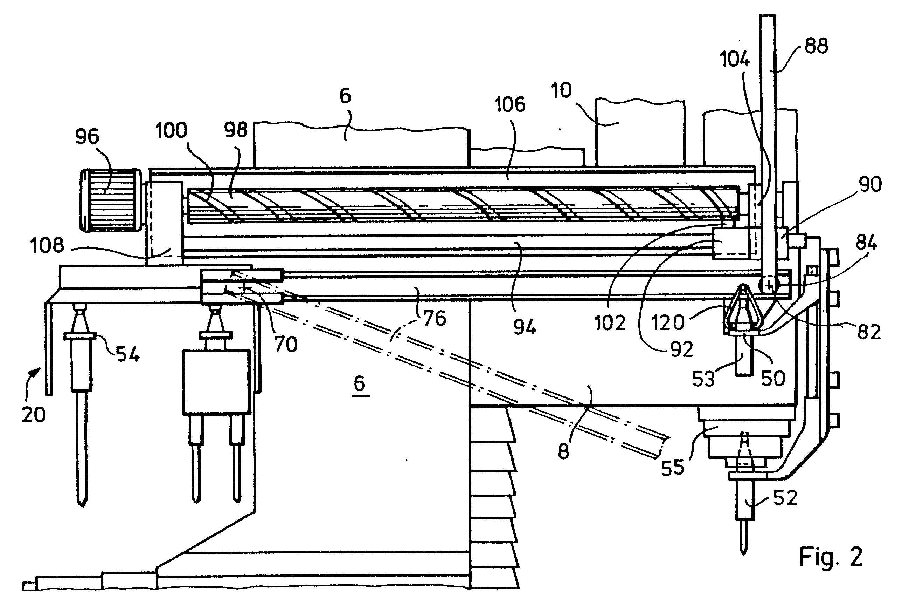

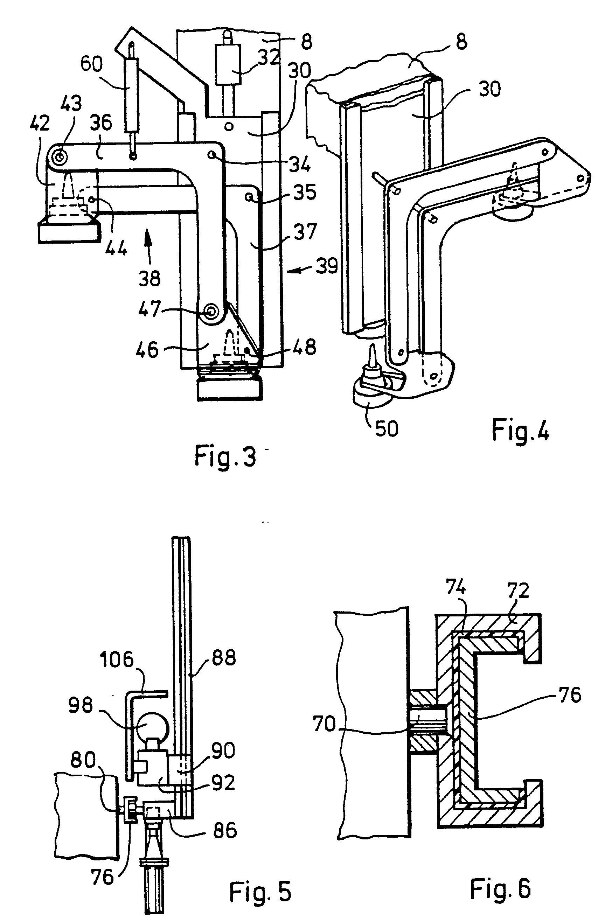

An der in Fig. 3 sichtbaren Vorderseite des Spindelstocks 8 ist eine Platte 30 in senkrechter Richtung verschiebbar geführt und durch eine hydraulische Kolben-Zylinder-Einheit 32 antreibbar. An der Platte 30 sind um zwei seitlich und in der Höhe gleich weit versetzte Achsbolzen 34 und 35 zwei Winkelstücke 36 und 37 schwenkbar gelagert. Die beiden Arme jedes Winkelstücks schliessen miteinander einen Winkel von 90° ein. Die beiden in Fig. 3 waagrecht verlaufenden Arme der Winkelstücke bilden einen Greiferarm 38, die senkrechten Arme einen Greiferarm 39. Die Arme beider Winkelstücke sind gleich lang. An den freien Enden der beiden in Fig. 3 waagrecht verlaufenden Arme iet eine Platte 42 mittels Gelenken 43 und 44 gelenkig gelagert, und an den freien Enden der senkrecht stehenden Arme ist eine Platte 46 mittels Gelenken 47 und 48 gelenkig gelagert. Die Achsen der Gelenke 43, 44 und 47, 48 verlaufen parallel zur Achse der Achsbolzen 34 und 35, und die Verbindungsebene der Gelenke 43 und 44 ist parallel zu der Verbindungsebene der Gelenkbolzen 34 und 35 und der Gelenke 47 und 48. Es wird somit für die Platte 42 und 46 eine Parallelführung gebildet, die diese Platten in der gezeigten Lage unabhängig von der Schwenkstellung der Winkelstücke 36 und 37 hält. An den Platten 42 und 46 ist jeweils ein steuerbarer Greifer 50 angeordnet, der in bekannter Weise einen vorspringenden Kragen 54 des Werkzeugs 52 bzw. 53 umfaßt. Dieser Kragen 54 ist in Fig. 2 bei einem der im Magazin befindlichen Werkzeuge bezeichnet. Die Vorrichtung zum Halten und Transportieren der Werkzeuge innerhalb des Magazins ist zur Zeichnungsvereinfachung nicht dargestellt.

Fig. 2 und 3 zeigt diejenige Stellung, in der das von den senkrechten Armen der Winkelstücke 36 und 37 gehaltene Werkzeug 53 in der Spindel 55 der Werkzeugmaschine eingespannt ist. Der Greifer 50 ist so ausgebildet, daß er den Kragen 54 des Werkzeugs 53 mit etwas Spiel umgreift, so daß sich das Werkzeug bei der Arbeit der Werkzeugmaschine frei drehen kann. Der Greifer 50 muß hierzu nicht geöffnet werden. Bei anderen Ausführungsformen der Erfindung kann es dagegen erforderlich sein, daß der Greifer 50 dann, wenn das Werkzeug in die Spindel eingespannt ist, sich öffnet. In der gezeigten Stellung befindet sich die Platte 30 in ihrer oberen Endstellung. Zum Ausspannen des Werkzeugs und zum nachfolgenden Werkzeugwechsel wird zunächst die Spannung des Werkzeugs in der Spindel 54 gelöst, dann wird die Platte 30 durch die Kolben-Zylinder-Einheit 32 nach unten gefahren, bis das Werkzeug aus der Spindel völlig herausgetreten ist, und anschließend werden durch Betätigen einer Kolben-Zylinder-Einheit 60, die einerseits an der Platte 30 und andererseits an dem Winkelstück 36 eingreift, die Winkelstücke 36 und 37 um 90° verschwenkt, so daß die in Fig. 3 nach links weisenden Arme nun nach unten weisen. Das ursprünglich eingespannte Werkzeug befindet sich nun in einer nach rechts angehobenen Stellung, wie dies in Fig. 4 gezeigt ist, und das im Halter der Platte 42 gehaltene Werkzeug gelangt unter die freie Werkzeugaufnahmeöffnung der Spindel. Anschließend wird die Platte 30 wieder angehoben, und das Werkzeug wird gespannt.

Wenn man gleiches Gewicht der beiden von den Winkelstücken 36 und 37 getragenen Werkzeuge annimmt, so besteht die Gleichgewichtslage dann, wenn sich die Werkzeuge auf gleicher Höhe befinden. Die in den Fig. 3 und 4 dargestellten Stellungen könnten mit den beiden möglichen Endlagen eines Gewichtspendels verglichen werden. Daraus ergibt sich der Vorteil, daß zum Verschwenken der Winkelstücke 36 und 37 auch bei relativ großem Gewicht der Werkzeuge nur eine verhältnismäßig kleine Kolben-Zylinder-Einheit 60 erforderlich ist, und daß außerdem nach dem Durchlaufen der soeben genannten Gleichgewichtslage sich die Bewegung der Winkelstücke 36 und 37 selbsttätig wieder abbremst, so daß nicht die Gefahr von harten Stößen am Ende der Bewegung besteht. Diese Pendelwirkung tritt deswegen auf, weil im Ausführungsbeispiel die Schwenkachsen 34 und 35 waagrecht verlaufen.

In Blickrichtung der Fig. 3 sind beidseits des Spindelstocks 8 und des Ständers 6 jeweils eine Transportvorrichtung vorgesehen, die in Fig. 3 nicht gezeigt ist, jedoch in Fig. 2 deutlich in Ansicht gezeigt ist. Diese Werkzeugtransportvorrichtung dient dazu, Werkzeuge zwischen dem Magazin 20 und den Greifern 50 der jeweils waagrecht angeordneten Arme der Winkelstücke 36 und 37 hin- und herzutransportieren.

Am Ständer 6 ist um eine in Fig. 2 angedeutete Achse 70 ein im wesentlichen durch einen Abschnitt eines U-Profils gebildetes Führungsstück 72 schwenkbar gelagert, das durch eine Kunststoffschicht 74 aus reibungsverminderndem Kunststoff, im Beispiel Polytetrafluoräthylen ausgekleidet ist. In dem Führungsstück 72 ist eine Führungsschiene 76, die durch ein U-Profil gebildet wird, verschiebbar geführt und durch die Achse 70 auch schwenkbar. Das Führungsstück 72 übergreift die Führungsschiene 76 noch etwas, um diese in ihrer Lage zu sichern. Die Achse 70 befindet sich dicht vor der linken Be- und Entladeöffnung des Magazins 20. Das vordere, in Fig. 2 rechte Ende der Führungsschiene 76 ist am Spindelkopf mittels eines Achsbolzens 80 gelenkig gelagert. Die Schwenkachse des Achsbolzens 80 verläuft, wie die Schwenkachse 70, waagrecht und ist achsgleich mit der Achse 82 eines Rades 84, das in die Führungsschiene 76 eingreift und durch diese geführt wird, und zwar dann, wenn sich das Rad 84 in seiner vordersten, in Fig. 2 am weitesten rechts liegenden Position befindet.

Das Rad 84 ist über ein starres Verbindungsstück 86 am unteren Ende einer Führungsstange 88 befestigt, die sich lotrecht erstreckt und in Führungsstücken 90 eines Wagens 92 verschiebbar geführt ist. Der Wagen 92 ist auf einer waagrecht von vorne nach hinten, in Fig. 2 von links nach rechts verlaufenden Stange 94 verschiebbar geführt. Parallel zur Stange 94 ist eine durch einen Elektromotor 96 antreibbare Walze 98 angeordnet, in die eine schraubengangähnliche Führungsnut 100 eingebracht ist, deren Steigung an beiden Enden der Walze 98 verhältnismäßig gering ist, jedoch im mittleren Bereich der Walze 98 groß ist. In die Führungsnut 100 greift ein am Wagen 92 angebrachter Stift 102 ein.

Wird die Walze 98 rotierend angetrieben, so bewegt sie je nach Drehrichtung durch den in sie eingreifenden Stift 102 den Wagen 92 mit dem daran befestigten Führungsstab 88 vorwärts oder rückwärts. Dabei rollt das Rad 84 zwischen den beiden Schenkeln der Führungsschiene 76. Das vordere Lager 104 der Walze 98 ist an einem Winkelblech 106 befestigt, dessen hinterer Endbereich an einem Lagerbock 108 für das hintere Ende der Walze 98 befestigt ist, der starr mit dem Ständer 6 verbunden ist. Auf diese Weise ist die Walze 98, die weit nach vorn über den Ständer 6 hinausragt, fest am Ständer 6 gelagert.

Fig. 2 zeigt die Maschine in der obersten Stellung der Spindel 55, in der die Führungsschiene 76 waagrecht verläuft. Es ist mit strichpunktierten Linien auch diejenige Stellung der Führungsschiene 76 angedeutet, die diese einnimmt, wenn sich die Spindel 55 in ihrer tiefstmöglichen Stellung befindet. In diesem Fall hat sich das hintere Ende der Führungsschiene 76 im Führungsstück 72 etwas nach vorne verschoben. Außerdem befindet sich dann, was in der Zeichnung nicht dargestellt iet, der Führungsstab 88 in einer nach unten verschobenen Stellung, in die er zwangsweise bewegt wird, weil das mit ihm verbundene Rad 84 mit der Führungsschiene 76 in Eingriff iet. Daher macht der Führungsstab 88 alle Vertikalbewegungen der Spindel bzw. des die Spindel drehbar lagernden Spindelstocks 8 mit. Unabhängig von der Höhenstellung des Führungsstabs 88 bleibt jedoch der Wagen 92 in seiner in Fig. 2 gezeigten Höhenlage, und der Stift 102 bleibt weiterhin in Eingriff mit der Führungsnut 100.

Wenn sich der Wagen 92 in seiner am weitesten nach hinten, in Fig. 2 nach links, verschobenen Stellung befindet, so liegt die Drehachse 82 des Rads 84 genau in der Achse 70 der Schwenklagerung des Führungsstücks 72. In dieser Stellung ändert sich daher die Höhenlage des Führungsstabs 88 nicht, auch wenn der Spindelstock 8 Vertikalbewegungen ausführt.

An dem Verbindungsstück 86 am unteren Ende des Führungsstabs 88 ist ein weiterer Greifer 120 angeordnet, der 80 ausgebildet ist, daß er das von dem Greifer 50, der an der Platte 42 befestigt ist, gehaltene Werkzeug erfassen kann. Hierzu ist auch der Greifer 50 entsprechend ausgebildet, er läßt nämlich in seiner Längsmittelebene Platz für den Eingriff des weiteren Greifers.

Es wird angenommen, daß sich in Fig. 3 die waagrechten Arme der Winkelstücke 36 und 37 soeben in diese waagrechte Lage bewegt haben, und daß nun das vom Greifer 50 der Platte 42 gehaltene Werkzeug aus dem Greifer 50 entfernt werden soll, damit es durch ein anderes Werkzeug aus dem Magazin 20 ersetzt werden kann. Der Greifer 120 befindet sich in einer Stellung, in der er in Eingriff mit dem Werkzeug gebracht werden kann, denn der Wagen 92 befindet sich in seiner vordersten Position. Sobald der Greifer 120, der in nicht gezeigter Weise pneumatisch betätigt ist, das Werkzeug 53 erfaßt hat, öffnet der bis dahin geschlossene Greifer 50. Es wird nun durch den Motor 96 die Walze 98 so angetrieben, daß sie den Wagen 92 nach hinten bewegt, bis dieser seine hinterste Endstellung erreicht hat. Nun befindet sich der Greifer 120 in einer Stellung, in der das von ihm gehaltene Werkzeug in eine leere Haltevorrichtung des Magazins 20 eingeführt ist. Diese Haltevorrichtung ergreift nun das Werkzeug, der Greifer 120 öffnet sich und gibt dadurch das Werkzeug frei. Der geöffnete Greifer läßt es zu, daß der Transport der von der Kette gehaltenen Werkzeuge im Magazin durch den geöffnete Greifer hindurch erfolgt. Die Transportvorrichtung des Magazins 20 setzt sich in Bewegung und bringt das nächste vom Greifer 120 zu erfassende Werkzeug in seinen Bereich. Der Greifer 120 ergreift dieses Werkzeug, wird anschließend wieder durch die Walze 98 nach vorne zum Greifer 50 bewegt und übergibt an diesen das Werkzeug. Wenn die Maschine mit dem Werkzeug 52 alle auszuführenden Arbeiten erledigt hat, wird das Werkzeug 52 aus der Spindel entfernt, die Winkelstücke 36 und 37 werden verschwenkt und das in der beschriebenen Weise soeben dem Greifer 50 neu zugeführte Werkzeug wird in die Spindel eingespannt.

Auf der der Zeichenebene der Fig. 2 abgewandten Seite der Maschine ist eine völlig gleiche, selbstverständlich jedoch spiegelbildlich aufgebaute Werkzeugtransportvorrichtung angeordnet, die demjenigen Greifer, der an der Platte 48 angeordnet ist, die Werkzeuge zuführt und von diesem wieder entnimmt.

Auch dann, wenn sich der Spindelstock 8 beim Werkzeugwechsel in einer abgesenkten Stellung befindet, wie dies fast immer der Fall sein wird, wobei also die Führungsschiene 76 eine geneigte Stellung einnimmt, kann die Übergabe des Werkzeugs zwischen dem Greifer 50 und dem weiteren Greifer 120 in völlig gleicher Weise wie soeben beschrieben erfolgen, denn der Greifer 120 befindet sich immer relativ zum Spindelstock 8 auf der gleichen Höhe, wenn der Wagen 92 seine vorderste Position hat. Ebenso befindet sich der weitere Greifer 120 relativ zum Magazin 20 immer auf gleicher Höhe, unabhängig von der Höhenlage des Spindelstocks 8, wenn der Wagen 92 seine hinterste Stellung eingenommen hat. Daher kann auch bei abgesenktem Spindelkopf die Übergabe des Werkzeugs vom Greifer 50 an den weiteren Greifer 120 der anschließende Transport nach hinten, wobei das Rad 84 in der Führungsschiene 76 aufwärts rollt und dadurch gleichzeitig den Führungsstab 88 und somit den Greifer 120 anhebt, und die Übergabe ins Magazin in völlig gleicher Weise wie beschrieben erfolgen. Der Führungsstab 88 bleibt in jeder Stellung des Spindelstocks 8 und des Wagens 92 lotrecht und bildet dadurch eine Parallelführung für den weiteren Greifer 120, so daß dieser die Werkzeuge sicher ergreifen und übergeben kann.

Die Führungsstücke 90, die den Führungsstab 88 führen, enthalten Kugelumlaufführungen, die sehr genau führen und nur eine geringe Reibung haben. Der Führungsstab 88 kann sich in seiner Schiebeführung daher nicht verklemmen.

Als besonders vorteilhaft wird angesehen, daß der Parallelführung für den Greifer 50 des Greifarms 38, 39 vorgesehen ist.

Als besonders vorteilhaft wird angesehen, daß die Werkzeugwechselvorrichtung zwei miteinander gekoppelte Greifarme 38, 39 aufweist.

Als besonders vorteilhaft wird angesehen, daß die Greifarme 38, 39 miteinander einen von 180° verschiedenen Winkel einschließen, wobei vorzugsweise der Winkel etwa 90° beträgt.

Als besonders vorteilhaft wird angesehen, daß die Schwenkachse 34, 35 im wesentlichen waagrecht verläuft.

Als besonders vorteilhaft wird angesehen, daß der Greifarm am Spindelstock 8 gelagert ist.

Als besonders vorteilhaft wird angesehen, daß die Greifarme 38, 39 an einem Schieber 30 gelagart sind, der an dem Spindelstock 8 parallel zur Spindelachse verschiebbar gelagert ist.

Als besonders vorteilhaft wird angesehen, daß der Wagen 92 mit einem Vorsprung 190 in eine schraubengangartige Führung 100 einer zur Verschiebebewegung des Wagens parallel angeordneten rotierend antreibbaren Walze 98 eingreift, und daß die Steigung der schraubengangähnlichen Führung über die Länge der Walze unterschiedlich ist.

**Patentansprüche**

1. Werkzeugmaschine mit einem in mehreren Achsen verfahrbaren Spindelstock (8), mit einem Ständer (6) an dem der Spindelstock (8) verfahrbar ist, mit einer auf einer Seite des Ständers (6) angeordneten Aufspannplatte (4) zum Befestigen von Werkstücken, mit einem auf der gegenüberliegenden Seite des Ständers (6) angeordneten Werkzeugmagazin (20) und mit mindestens einer Transportvorrichtung zum Transportieren von Werkzeugen (52, 53) zwischen dem Werkzeugmagazin (20) und einer im Spindelstock (8) vorgesehenen Spindel (55), wobei die Transportvorrichtung eine Führungsschiene (76) aufweist, deren eines Ende an einem relativ zum Werkzeugmagazin (20) raumfesten Punkt und deren entgegengesetztes Ende am Spindelstock (8) jeweils gelenkig befestigt ist und ein Greifer (120) für die Werkzeuge (52, 53) entlang der Führungsschiene (76) mittels einer Antriebsvorrichtung zwischen einer ersten Übergabeposition am Werkzeugmagazin (20) und einer zweiten Übergabeposition am Spindelstock (8) bewegbar ist, in der das Werkzeug (52, 53) mittels eines am Spindelstock (8) angelenkten Greifarmes (38, 39) Zwischen der zweiten Übergabeposition und einer Position in der Spindel (55) austauschbar ist, dadurch gekennzeichnet, daß der Greifarm (38, 39) um eine im wesentlichen radial zur Spindelachse verlaufende Schwenkachse, die in einer Ebene des Koordinatsystems der Werkzeugmaschine liegt, schwenkbar ist, daß die Antriebsvorrichtung eine mit dem Greifer (120) verbundene Führungsstange (88) aufweist, die in einem Wagen (92) in Richtung der Achse verschiebbar gelagert ist und daß der Wagen (92) in einer Richtung senkrecht zur Achse zwischen Spindelstock (8) und Werkzeugmagazin (20) verfahrbar ist.

2. Werkzeugmaschine nach Anspruch 1, dadurch gekennzeichnet, der Wagen (92) mit einem Vorsprung (102) in eine schraubengangartige Führung (100) einer zur Verschiebebewegung des Wagens (92) parallel angeordneten, rotierend antreibbaren Walze (98) eingreift.

3. Werkzeugmaschine nach Anspruch 2, dadurch gekennzeichnet, daß die Steigung der schraubengangartigen Führung (100) über die Länge der Walze (98) unterschiedlich ist.

4. Werkzeugmaschine nach einem der Ansprüche 1 bis 3, dadurch gekennzeichnet, daß der Greifer (120) in der Führungsschiene (76) mittels eines Führungsstücks (84) geführt ist, daß das Führungsstück (84) dann, wenn der Wagen (92) sich in seiner vom Werkzeugmagazin (20) am weitesten entfernten Stellung befindet, in Verlängerung einer Schwenklagerung-Achse (80) liegt, mit der die Führungsschiene (76) am Spindelstock (8) angelenkt ist.

5. Werkzeugmaschine nach einem der Ansprüche 1 bis 4, dadurch gekennzeichnet, daß der Greifer (120) in der Führungsschiene (76) mittels eines Führungsstücks (84) geführt ist, daß das Führungsstück (84) in seiner dem Werkzeugmagazin (20) am weitesten angenäherten Stellung in Verlängerung einer weiteren Schwenklagerung-Achse (70) liegt, mit der die Führungsschiene (76) am raumfesten Punkt schwenkbar gelagert ist.

6. Werkzeugmaschine nach einem der Ansprüche 1 bis 5, dadurch gekennzeichnet, daß beidseits des Spindelstocks (8) eine Transportvorrichtung vorgesehen ist.

7. Werkzeugmaschine nach Anspruch 6, dadurch gekennzeichnet, daß der Greifarm zwei miteinander gekoppelte Arme (38, 39) aufweist, die miteinander einen von 180° verschiedenen Winkel, vorzugsweise einen Winkel von 90°, einschließen und an ihren Enden weitere Greifer (50) aufweisen.

8. Werkzeugmaschine nach Anspruch 7, dadurch gekennzeichnet, daß der Greifarm (38, 39) eine waagerechte Schwenkachse (34, 35) aufweist, daß in den beiden Endlagen der Schwenkung des Greifers (38, 39) die weiteren, Greifer (50) jeweils ein Werkzeug (52) in einer mit der Spindelachse fluchtenden Lage bzw. ein anderes Werkzeug (53) in der zweiten Übergabeposition halten und daß der Greifarm (38, 39) an einem Schieber (30) gelagert ist, der an dem Spindelstock (8) parallel zur Spindelachse verschiebbar gelagert ist.

## Claims

1. A machine tool comprising a spindle stock (8) being displaceable in several coordinate directions, and an upright (6), the spindle stock (8) being displaceable along said upright (6), a work plate (4) being arranged on one side of the upright (6) for attaching workpieces thereon, a tool magazine (20) being arranged on the opposite site of said upright (6), and at least one conveyor for conveying tools (52, 53) between the tool magazine (20) and a spindle (55) provided in said spindle stock, the conveyor being provided with a guide rail (76), one end of which being pivotably attached to a point fixed to said tool magazine (20) and the other end being pivotably attached to the spindle stock (8), a gripping element (120) for the tools (52, 53) being, by means of a drive unit, displaceable along the guide rail (76) between a first transfer position on the tool magazine (20) and a second transfer position on the spindle stock (8) in which the tool (52, 53) is exchangeable between the second transfer position and a position in the spindle (55) by means of a gripper arm (38, 39) pivotable attached to the spindle stock (8), characterized in that the gripper arm is pivotable about an axis being essentially perpendicular to the spindle axis and lying in a plane of the coordinate system of the machine tool, that the drive unit is provided with a guide rod (88) attached to the gripping element (120) and journalled slideably in the direction of the axis in a carriage (92), and said the carriage (92) is displaceable between the spindle stock (8) and the tool magazine (20) in a direction perpendicular to the axis.

2. The machine tool of claim 1, characterized in that the carriage (92) enters into a helicoidal guide keyway (100) with a pin (102), the keyway (100) being provided on a roll (98) arranged in parallel to a displacement direction of the carriage (92).

3. The machine tool of claim 2, characterized in that the pitch of the helicoidal guide keyway (100) varies over the length of the roll (98).

4. The machine tool of any of claims 1 to 3, characterized in that the gripping element (120) is guided in the guide rail (76) by means of a guide element (84), and that the guide element (84) is arranged aligned with a shaft journal axis (80) by which the guide rail (76) is pivotably attached to the spindle stock (8), when the carriage (92) is in a maximum distance position from the tool magazine (20).

5. The machine tool of any of claims 1 to 4, characterized in that the gripping element (120) is guided in the guide rail (76) by means of a guide element (84), and that the guide element (84) is arranged aligned with a further shaft journal axis (70) by which the guide rail (76) is pivotably attached to the fixed point, when the guide element (84) is in its minimum distance position from the tool magazine (20).

6. The machine tool of any of claims 1 to 5, characterized in that a conveyor is provided on both sides of the spindle stock.

7. The machine tool of claim 6, characterized in that the gripper arm is provided with two arms (38, 39) coupled to each other and defining with each other an angle different from 180 degrees and preferably of 90 degrees, and being equipped at their ends with further gripping elements (50).

8. The machine tool of claim 7, characterized in that the gripper arm (38, 39) has a horizontal shaft journal (34, 35), that the further gripping elements (50), when the gripping elements (38, 39) are in their end position of pivoting, each hold a tool (52) in a position aligned with the spindle axis, or hold another tool in the second transfer position, respectively, and that the gripper arm (38, 39) is journalled in a sliding element (30), the latter being slideably arranged on the spindle stock in a direction parallel to the spindle axis.

**Revendications**

1. Machine-outil avec une poupée (8) mobile selon plusieurs axes, avec un support (6) , sur lequel peut se déplacér la poupée (8), avec une plaque de fixation (4) situeé sur un côté du support (6) pour la fixation des pièces, avec un magasin à outil (20) situé sur le côté opposé du support (6) et avec au moins un dispositif de transport des outils (52, 53) entre le magasin à outil (20) et une broche (55) prévue dans la poupée (8), le dispositif de transport présentant un rail-guide (76), dont une extrémité est fixée articulée en un point fixe par rapport au magasin à outil (20) et dont l'extrémité opposée est fixée articulée sur la poupée (8), et une griffe (120) pour les outils (52, 53) étant mobile le long du rail-guide (76), à l'aide d'un dispisitif d'entraînement entre une première position de transfert près du magasin à outil (20) et une seconde position de transfert sur la poupée (8), dans laquelle l'outil (52, 53) peut être, à l'aide d'un bras de saisie (38, 39) articulé sur la poupée (8), échangé entre la seconde position de transfert et une position dans la broche (55), caractérisée en ce que le bras de saisie (38, 39) est basculant autour d'un axe essentiellement radial par rapport à l'axe de la broche et qui se trouve dans un plan de système de coordonnées de la machine-outil, que le dispositif d'entraînement présente une tige de guidage (88) reliée à la griffe (120) et qui coulisse dans un chariot (92) dans la direction de l'axe, et que le chariot (92) est mobile entre la poupée (8) et le magasin à outil (20) selon une direction perpendiculaire à l'axe.

2. Machine-outil selon la revendication 1, caractérisée en ce que le chariot (92) est en prise avec un ergot (102) dans un guide hélicoïdal (100) d'un rouleau (98) rotatif positivement, parallèle au mouvement de déplacement du chariot (92).

3. Machine-outil selon la revendication 2, caractérisée en ce que le pas du guide hélicoïdal (100) varie le long du rouleau (98).

4. Machine-outil selon l'une des revendications 1 à 3, caractérisée en ce que la griffe (120) est guidée dans le rail-guide (76) à l'aide d'un guide arrière (84), que le guide arrière (84), lorsque le chariot (92) se trouve dans sa position la plus éloignée du magasin à outil (20), est en prolongement d'un axe du palier de basculement (80), avec lequel est articulé le rail-guide (76) sur la poupée (8).

5. Machine-outil selon l'une des revendications 1 à 4, caractérisée en ce que la griffe (120) est guidée dans le rail guide (76) à l'aide d'un guide arrière (84), que le guide arrière (84) se trouve dans sa position la plus proche du magasin à outil (20) en prolongement d'un second axe de palier de basculement (70), sur lequel repose le rail-guide (76) basculant au point fixe.

6. Machine-outil selon l'une des revendications 1 à 5, caractérisée en ce que des deux côtés de la poupée (8) est prévu un dispositif de transport.

7. Machine-outil selon la revendication 6, caractérisée en ce que le bras de saisie présente deux bras (38, 39) couplés, qui font entre eux un angle différent de 180°, de préférence un angle de 90°, et possèdent à leurs extrémités d'autres griffes.

8. Machine-outil selon la revendication 7, caractérisée en ce que le bras de saisie (38, 39) présente un axe de basculement (34, 35) horizontal, que dans les deux positions extrêmes de basculement du bras de saisie (38, 39), les autres griffes (50) maintiennent chacune un outil (52) dans une position alignée avec l'axe de la broche ou un autre outil (53) dans la seconde position de transfert et que le bras de saisie (38, 39) repose sur une coulisse (30), qui est mobile sur la poupée (8), parallèlement à l'axe de la broche.

Fig.1

Fig. 2

EP 0 157 950 B1

Fig. 3

Fig. 4

Fig. 5

Fig. 6